# EUROPÄISCHE PATENTSCHRIFT

(11) **EP 2 815 565 B1**
(45) Veröffentlichungstag und Bekanntmachung des Hinweises auf die Patenterteilung: **20.12.2017**
(21) Anmeldenummer: 12705617.4
(22) Anmeldetag: 16.02.2012
(51) Int. Cl.: H04M 3/42, H04M 7/00, H04L 29/06

(54) **VERFAHREN ZUM HANDHABEN EINER TELEKOMMUNIKATIONSVERBINDUNG, TELEKOMMUNIKATIONSANORDNUNG, VERMITTLUNGSEINRICHTUNG UND NETZKOPPLUNGSEINRICHTUNG**
METHOD FOR HANDLING A TELECOMMUNICATIONS CONNECTION, TELECOMMUNICATIONS ARRANGEMENT, SWITCHING DEVICE AND NETWORK COUPLING DEVICE
PROCÉDÉ DE GESTION D'UNE LIAISON DE TÉLÉCOMMUNICATION, DISPOSITIF DE TÉLÉCOMMUNICATION, SYSTÈME DE COMMUTATION ET SYSTÈME DE COUPLAGE À UN RÉSEAU

(43) Veröffentlichungstag der Anmeldung: 24.12.2014
(73) Patentinhaber: Unify GmbH & Co. KG, 80807 München (DE)
(72) Erfinder: ERMANN, Berthold, 48249 Dülmen (DE); SCHÖNFELD, Norbert, 44309 Dortmund (DE); SCHWARTZE, Jürgen, 58239 Schwerte (DE)
(74) Vertreter: Fritzsche, Thomas
(86) Internationale Anmeldenummer: PCT/EP2012/000705
(87) Internationale Veröffentlichungsnummer: WO 2013/120501

(56) Entgegenhaltungen:
- EP-A1- 2 355 537
- US-A1- 2007 070 976
- US-A1- 2007 206 569
- US-A1- 2011 081 911

## Beschreibung

Die Erfindung betrifft ein Verfahren zum Handhaben einer Telekommunikationsverbindung, eine Telekommunikationsanordnung, eine Vermittlungseinrichtung und eine Netzkopplungseinrichtung, wobei die Telekommunikationsverbindung die Übertragung von frequenzcodierten Signalen auf einem Payload-Kanal vorsieht.

In einer Telefonanlage benötigt eine Vermittlungsstelle wie etwa ein sog. PABX (Private Automatic Branch Exchange) für die Steuerung von Leistungsmerkmalen in vielen Fällen die Erkennung von Benutzereingaben im Gespräch. Dieses ist insbesondere dann der Fall, wenn neben der Sprachverbindung kein weiterer Datenkanal zur Signalisierung zur Verfügung steht.

Es ist bekannt, Benutzereingaben in Kommunikationssystemen über DTMF-Zeichen zu signalisieren. DTMF (Dual Tone Multi-Frequency - dt. etwa Zweiton-Mehrfreqenz) ist ein Mehrfrequenzwahlverfahren, bei welchem gewählte Ziffern bzw. Tasten eines Endgeräts durch eine Überlagerung zweier Sinustöne (sinusförmiger Tonsignale) repräsentiert werden. Die Sinustöne werden übertragen und in einer Vermittlungsstelle oder dergleichen interpretiert. Bei einer Art der Übertragung, die auch als Outband-Übertragung bezeichnet wird, werden die Zeichen im Signalisierungskanal, z. B. bei ISDN im D-Kanal, übertragen. Bei einer anderen Art der Übertragung, die auch als Inband-Übertragung bezeichnet wird, werden die Zeichen im Sprachkanal, z.B. durch Töne, übertragen. Im diesem klassischen Kommunikationsumfeld werden zwei Kommunikationspartner im sogenannten Koppelfeld zusammengeschaltet. Durch den Einsatz von DTMF-Empfängern kann die Vermittlungstechnik dann entscheiden, wann eine DTMF-Erkennung notwendig ist, und kann einen geeigneten Codeempfänger über das Koppelfeld ins vorhandene Gespräch einkoppeln.

In der Entwicklung zu VolP ist zunächst der Einsatz digitaler Signalprozessoren (DSP) bevorzugt worden. Dabei wurden ebenfalls zwei VolP-Endgeräte im Koppelfeld zusammengeschaltet. In weiteren Entwicklungsschritten ist man dann zum Konzept der "Aushandlung direkter Payload" übergegangen, um den Einsatz digitaler Signalprozessoren möglichst zu vermeiden und auch rein softwarebasierte VolP-Vermittlungssysteme zu ermöglichen. Dabei wird im Signalisierungskanal zuerst die Art der DTMF-Übertragung ausgehandelt, z.B. RFC2833, und anschließend werden dann im Payloadkanal z.B. RTP, spezielle Pakete übertragen, welche die DTMF-Zeichen repräsentieren. Bei VolP-Lösungen werden aber oftmals Signalisierung und Payloadkanal auf unterschiedlichen Wegen geroutet. Dabei kann es sein, dass der Sprachkanal nicht mehr über die Vermittlungsstelle (PABX) verläuft. Die Erkennung von DTMF-Zeichen durch die Vermittlungsstelle ist dann nicht mehr möglich, weil nur der Signalisierungs-Strom, nicht jedoch der Payload-Strom zur PABX geroutet wird. Bisher kann das Problem nur gelöst werden, wenn die direkte Sprachverbindung zur Erkennung von DTMF-Zeichen unterbrochen wird und wieder digitale Signalprozessoren eingebunden werden.

Somit ist die Erkennung von DTMF-Zeichen für eine Vermittlungsstelle im VolP-Umfeld oft nicht mehr gegeben, und es können Leistungsmerkmale im Gespräch nicht mehr angereizt werden.

In EP 2 355 537 A1 wird ein Fehlerkorrekturverfahren für DTMF-Verfälschungen auf einem Uplink beschrieben, bei dem z.B. ein mobiles Endgerät über einen Datenkanal anzeigt, dass eine PBX einen Ruf in seinem Namen zu einer angerufenen Partei einrichten soll. Das mobile Endgerät kann Mechanismen einsetzen, die ANI-Information, Senden und Empfangen von akustischen Bestätigungscodes über einen Sprachkanal einschließen können, der nach einer Antwort auf einen eingehenden Ruf aufgebaut ist.

In US 20070070976 A1 wird ein Verfahren beschrieben, bei dem ein Gateway DTMF-Ziffern einfängt, diese interpretiert, entscheidet, dass ein besonderes Merkmal während eines Rufes beantragt werden soll und das geeignete Merkmal während des Rufes herstellt.

In US 2007/0206569 A1 und US 2011/081911 A1 werden jeweils ein Verfahren zur DTMF-Erkennung in a VolP-Netzwerk beschrieben, bei dem ein "Packet Engine" ein DTMF-Ereignis, das in einem RTP-Paket eines Trägerstroms zwischen Endgeräten enthalten ist, an einen "call server" z. B. in Form eines routenden Proxy berichtet, wobei das RTP-Paket den "Packet Engine" nicht verlässt.

Eine Aufgabe der vorliegenden Erfindung besteht darin, Benutzereingaben in einer Sprachkommunikationsverbindung auch in einem VolP-Umfeld so zu übertragen, dass eine Erkennung von Signalen, welche die Benutzereingaben repräsentieren, in einer Vermittlungsstelle erkannt werden können.

Die Aufgabe wird durch das Verfahren gemäß Anspruch 1, die Telekommunikationsanordnung gemäß Anspruch 12, die Vermittlungseinrichtung gemäß Anspruch 13 und die Netzkopplungseinrichtung gemäß Anspruch 14 gelöst. Weiterbildungen der Erfindung sind den abhängigen Ansprüchen zu entnehmen.

Das erfindungsgemäße Verfahren zum Handhaben einer Telekommunikationsverbindung zwischen wenigstens zwei Teilnehmern, wobei die Telekommunikationsverbindung einen Signalisierungskanal zur Übertragung eines Signalisierungsstroms und einen Payload-Kanal zur Übertragung eines Payload-Stroms aufweist, wobei frequenzcodierte Signale in dem Payload-Strom übertragen werden, wobei wenigstens ein Teilnehmer der wenigstens zwei Teilnehmer einem Netz zugeordnet ist, das eine Vermittlungseinrichtung und eine von der Vermittlungseinrichtung getrennt vorgesehene Signalverarbeitungseinrichtung aufweist, wobei die frequenzcodierten Signale in dem Payload-Strom durch die Signalverarbeitungseinrichtung erkannt und unabhängig von dem Payload-Strom an die Vermittlungseinrichtung übertragen werden, ist dadurch gekennzeichnet, dass anhand von Parametern in SIP-Signalen bzw. in in dem SIP-Signal eingebetteten SDP-Signalen in einem Feature-Prozess entschieden wird, ob die Telekommunikationsverbindung den Empfang von DTMF-Zeichen erforderlich machen könnte, dass falls die Entscheidung positiv getroffen wird, durch die Vermittlungseinrichtung mittels Fernprogrammierung eine Regel in der Signalverarbeitungseinrichtung gesetzt wird, welche die Signalverarbeitungseinrichtung in die Lage versetzt und/oder anweist, spezielle, frequenzcodierten Signale aus dem Payload-Strom zu erkennen und auszufiltern.

Bei dem erfindungsgemäßen Verfahren können auch im Bereich der IP-Telefonie, wo der Payload-Kanal nicht über die Vermittlungseinrichtung geleitet wird, frequenzcodierte Signale, die über den Payload-Kanal übertragen werden, die Vermittlungseinrichtung erreichen und dort einer weiteren Verarbeitung oder Nutzung zugeführt werden. In Telefonie-Umgebungen, in welchen der Payload-Kanal über die Vermittlungseinrichtung geleitet wird, kann durch das gezielte Abzweigen frequenzcodierter Signale aus dem Payload-Kanal die Weiterleitung an die Vermittlungseinrichtung beschleunigt werden.

Die Erfindung ist insbesondere bei frequenzcodierten Signalen wie etwa Tonwahlsignale, insbesondere DTMF-Zeichen, die Benutzereingaben eines Teilnehmers repräsentieren, vorteilhaft anwendbar, da solche Zeichen oft zur Steuerung von Leistungsmerkmalen der Vermittlungseinrichtung verwendet werden. Die Vermittlungseinrichtung kann beispielsweise eine Telefonanlage wie etwa eine PBX, eine PABX, oder IP-PABX oder dergleichen sein, und das Netz kann ein lokales Netz, insbesondere ein LAN, W-LAN oder dergleichen sein.

Vorzugsweise ist die Signalverarbeitungseinrichtung eine Netzkopplungseinrichtung, insbesondere ein Router oder ein Gateway oder dergleichen, oder Teil einer Netzkopplungseinrichtung oder einer Netzkopplungseinrichtung verbindungstechnisch zugeordnet, die an einer zentralen Stelle in dem Netz vorgesehen ist. Solche zentralen Stellen stehen am Knotenpunkt zwischen Netzen, wo der Signalisierungskanal und der Payload-Kanal einer Telekommunikationsverbindung zusammenlaufen.

Die Kommunikationsverbindung kann über im Signalisierungskanal übertragene SIP/SDP-Signale aufgebaut werden, und ein Nutzdatenstrom kann über RTP-Signale im Payload-Kanal übertragen werden. Diese Protokolle, die im Zusammenhang mit dem Ausführungsbeispiel näher erläutert werden, sind insbesondere von Bedeutung, wenn die Kommunikationsverbindung eine VolP-Verbindung ist. Insbesondere bei solchen Kommunikationsverbindungen wird der Payload-Kanal unter Umgehung der Vermittlungseinrichtung übertragen, während der Signalisierungskanal vorteilhafterweise über die Vermittlungseinrichtung geleitet wird, um dort die Verbindungsparameter zur Initiierung und Handhabung der Telekommunikationsverbindung zu nutzen.

Wenn die frequenzcodierten Signale durch die Signalverarbeitungseinrichtung aus dem stromabwärtigen Payload-Strom entfernt werden, kann jede Störung der Sprachsignale beim Empfänger vermieden werden. Unter dem stromabwärtigen Payload-Strom ist der Payload-Strom nach Durchlaufen der Signalverarbeitungseinrichtung zu verstehen, unabhängig davon, von welcher Seite aus die Verbindung aufgebaut wurde. Hierdurch wird auch der Payload-Strom gestrafft, und im Empfangsgerät, in welchem die RTP-Signale in akustische Signale gewandelt werden, ist keine erneute Ausfilterung von DTMF-Signalen mehr erforderlich.

Wenn zur Übertragung der frequenzcodierten Signale an die Vermittlungseinrichtung eine eigene Verbindung bzw. ein eigener Verbindungskanal aufgebaut wird, kann eine störungsfreie und schnelle Weiterleitung sichergestellt werden.

Wenn andererseits die frequenzcodierten Signale von der Signalverarbeitungseinrichtung über den Signalisierungskanal an die Vermittlungseinrichtung übertragen werden, können Prozesse zum Aufbauen und Handhaben einer eigenen Verbindung bzw. eines eigenen Verbindungskanals vermieden werden.

Nach Gesichtspunkte betrifft die Erfindung eine Telekommunikationsanordnung zur Handhabung einer Telekommunikationsverbindung nach Anspruch 12, eine Vermittlungseinrichtung zur Handhabung einer Telekommunikationsverbindung in einer Telekommunikationsanordnung nach Anspruch 13 und eine Netzkopplungseinrichtung zur Handhabung einer Telekommunikationsverbindung in einer Telekommunikationsanordnung nach Anspruch 14.

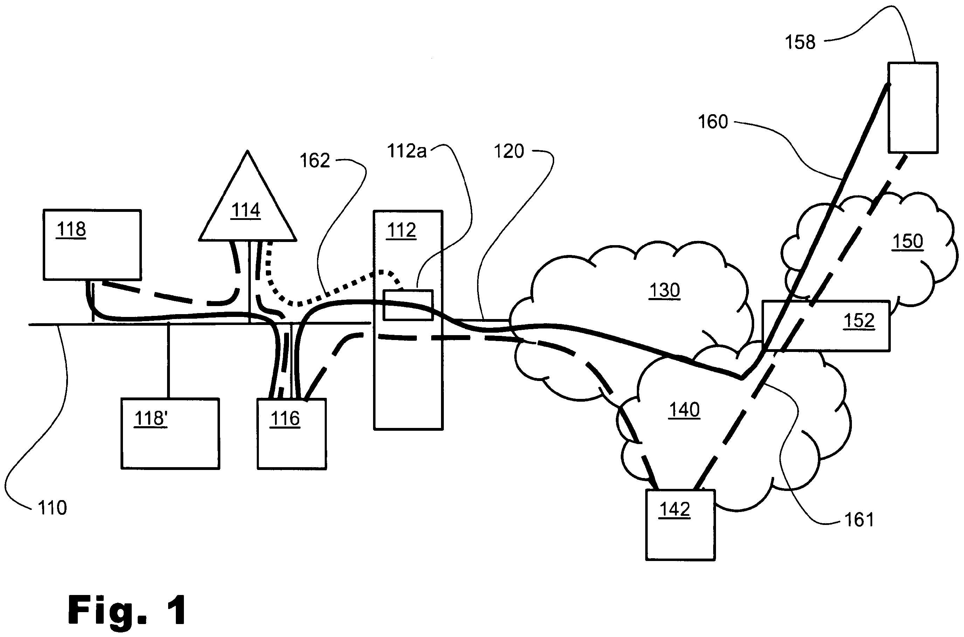

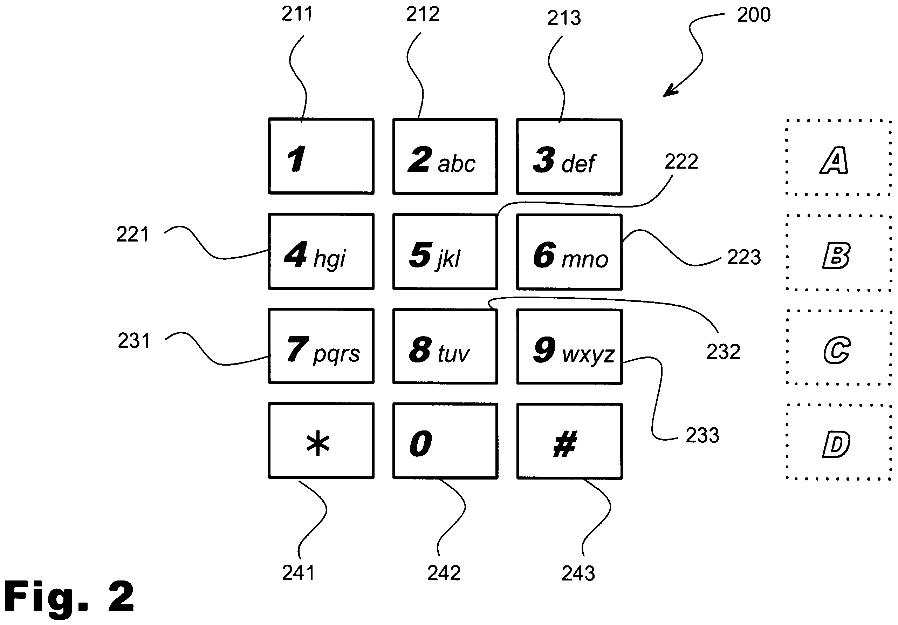

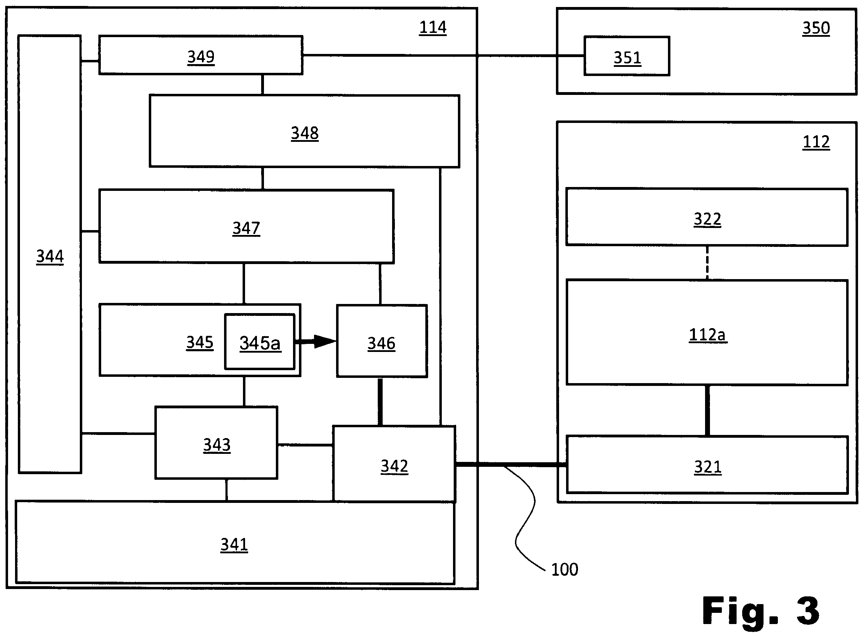

Im Folgenden wird die Erfindung anhand bevorzugter Ausführungsbeispiele und mit Hilfe von Figuren näher beschrieben. Dabei
ist Fig. 1 eine schematische Darstellung einer Telekommunikationsanordnung gemäß einem Ausführungsbeispiel der vorliegenden Erfindung;
ist Fig. 2 eine schematische Darstellung eines Tastenwahlblocks; und
ist Fig. 3 ein schematisches Blockschaltbild einer IP-PABX und eines Routers aus Fig. 1 mit einem Feature-Prozess.

In Fig. 1 ist eine Telekommunikationsanordnung gemäß einem bevorzugten Ausführungsbeispiel der vorliegenden Erfindung schematisch dargestellt.

Gemäß der Darstellung in Fig. 1 ist ein Nahbereichsnetz (lokales Netz oder LAN - Local Area Network) 110 über einen Router 112 an ein Weitbereichsnetz (WAN - Wide Area Network) 120 gekoppelt.

In dem lokalen Netz 110 sind neben dem Router 112 eine IP-Telefonanlage (IP-PABX) 114, ein Session Border Controller (SBC) 116, ein VolP-Telefon 118 und weitere Endgeräte, die durch ein Endgerät 118' symbolisiert sind, angeschlossen. Das lokale Netz 110 kann ein kabelgebundenes LAN oder ein Funknetz (WLAN) sein.

Der Router 112 ist ein Kopplungselement auf der Vermittlungsschicht des OSI-Modells. Er dient der Anbindung bzw. Kopplung unterschiedlicher Telekommunikationsnetze, hier des LAN 110 und des WAN 120, dient. Er ist also insbesondere eine Netzkopplungseinrichtung im Sinne der Erfindung.

Eine PABX (Private Automatic Branch Exchange, dt. etwa Nebenstellenanlage) ist eine lokale Telefonanlage, die zur Versorgung eines lokalen Netzes wie etwa eines Büronetzes oder privaten Netzes mit Telefondiensten vorgesehen ist. Als IP-PABX wird eine Telefonanlage bzw. Nebenstellenanlage bezeichnet, die in der Lage ist, auf der Grundlage des Internet-Protokolls (IP - Internet Protocol) Verbindungen zu vermitteln. Das Internet-Protokoll IP ist auf der Vermittlungsschicht (3. Schicht) des OSI-Schichtenmodells angeordnet und dient dazu, Datenpakete zu adressieren und in einem paketorientierten Netz zu vermitteln. Die IP-Telefonanlage (IP-PABX) 114 ist eine Vermittlungseinrichtung im Sinne der Erfindung. Sie kann zusätzlich zu der reinen Vermittlungsaufgabe noch andere Aufgaben aufweisen. Insbesondere kann die IP-PABX 114 auch eingerichtet sein, Verbindungen auch auf der Grundlage anderer Protokolle als des Internet-Protokolls IP zu vermitteln.

Das SBC (engl. Session Border Controller) 116 ist eine Sicherheitsinstanz und allgemein ein Steuergerät für VolP-Verbindungen. VolP (Voice over IP) ist eine Technologie, die es ermöglicht, Telefondienste und insbesondere Sprachverbindungen auf der Grundlage des Internet-Protokolls IP und einer IP-Infrastruktur zu verwirklichen und zu vermitteln. Die Aufgabe des SBC 116 ist es, innerhalb des lokalen Netzes 110 Anrufe anzuerkennen, Verbindungen zu authentifizieren und zu verschlüsseln und die Infrastruktur zu verschleiern. Der SBC 116 kann somit auch als ein VolP-Steuergerät bezeichnet werden.

Als VolP-Telefon wird ein Telekommunikationsendgerät verstanden, das zur Telefonie über das Internet-Protokoll eingerichtet ist. Neben dem VolP-Telefon 118 können auch weitere Endgeräte 118' als VolP-Telefone ausgestaltet sein.

Das Weitbereichsnetz 120 umfasst mehrere Netze, hier das Internet 130, eine SIP-Umgebung 140 mit einem SIP-Provider 142, und ein Mobilfunknetz 150, das über ein Gateway 152 an die SIP-Umgebung 140 gekoppelt ist. In dem Mobilfunknetz 150 ist ein Mobiltelefon 158 stellvertretend dargestellt.

Die vorliegende Erfindung wird nachstehend anhand einer Telekommunikationsverbindung, die zwischen dem Mobiltelefon 158 und dem VolP-Telefon 118 aufgebaut wird und einen Sprachkanal 160 und einen Signalisierungskanal 161 aufweist, näher erläutert werden. Das VolP-Telefon 118 und das Mobiltelefon 158 sind Teilnehmer im Sinne der Erfindung.

Die SIP-Umgebung 140 ist eine Umgebung, die ein Internet-Anbieter bereitstellt, um Kommunikationsverbindungen (sog. Sitzungen) über das Internet leiten zu können. Es kann insoweit als Teil des Internet 130 angesehen werden.

SIP (Session Initiation Protocol, deutsch etwa Sitzungsinitüerungsprotokoll) ist ein Netzprotokoll zum Aufbau, zur Steuerung und zum Abbau einer Kommunikationssitzung zwischen zwei und mehr Teilnehmern. Das Protokoll wird u. a. im RFC 3261 (http://tools.ietf.org/html/rfc3261) spezifiziert. In der IP-Telefonie ist das SIP ein häufig angewandtes Protokoll. Ein SIP-Provider wie der SIP-Provider 142 ist ein Verzeichnisdienst, um einen Teilnehmer im Internet auffinden zu können. In dem SIP-Provider 142 ist für jeden Teilnehmer ein Account (Konto) mit Rufnummer und Benutzerdaten hinterlegt. Über diesen Account werden Gesprächsanforderungen an das eigentliche Ziel im Internet verwiesen.

Das Mobilfunknetz 150 ist ein paketorientiertes Funkkommunikationsnetz, in welchem Datenpakete auf der Grundlage eines Zeitmultiplex-Verfahrens (TDM - Time Division Multiplex) übertragen werden. Ohne Beschränkung der Allgemeinheit ist das Mobilfunknetz 150 ein GSM-Netz und ist das Mobiltelefon 158 ein GSM-Mobiltelefon. Das Mobiltelefon 158 ist auch DTMF-fähig (Erläuterungen hierzu werden weiter unten gegeben).

Eine Telekommunikationsverbindung zwischen dem Mobiltelefon 158 und dem IP-Telefon 118 weist, wie vorstehend erwähnt, einen Sprachkanal 160 und einen Signalisierungskanal 161 auf. Allgemein wird der Sprachkanal 160 auch als Payload-Kanal (Nutzlastkanal oder Nutzdatenkanal) bezeichnet, da über diesen Sprachkanal 160 auch Daten übertragen werden können, die keine Sprachsignale wiedergeben. So können über den Sprachkanal 160 auch SMS-Daten, MMS-Daten, Dokumente oder anderes übertragen werden.

Innerhalb des SIP-Protokolls (s. o.) wird für die Übertragung der Sprachsignale (des Payload-Stroms) das RTP (Real Time Transport Protocol bzw. Echtzeittransportprotokoll) verwendet. RTP ist ein Protokoll zur kontinuierlichen Übertragung von audiovisuellen Daten (Streams) über IP-basierte Netzwerke. Das Protokoll wurde erstmals 1996 im RFC 1889 standardisiert. 2003 wurde ein überarbeiteter RFC veröffentlicht. Der RFC 3550 löste damit den RFC 1889 ab. Es dient dazu, Multimedia-Datenströme (Audio, Video, Text, etc.) über Netzwerke zu transportieren, d.h. die Daten zu kodieren, zu paketieren und zu versenden. RTP ist ein paketbasiertes Protokoll und wird normalerweise über UDP betrieben. UDP (User Datagramm Protocol) ist ein einfaches, verbindungsloses Protokoll zur Übertragung von Daten über das Internet, das eine gegenüber TCP (Transmission Control Protocol), das stets eine Verbindung zwischen Endpunkten (Sockets) einer Netzverbindung herstellt, einfachere Struktur aufweist und auf der Transportschicht des OSI-Schichtenmodells angesiedelt ist. RTP kann sowohl für Unicast-Verbindungen als auch für Multicast-Kommunikation im Internet eingesetzt werden. RTP findet Anwendung in vielen Bereichen, u.a. wird es bei den IP-Telefonie-Technologien H.323 und SIP dazu verwendet, die Audio-/Videoströme des Gespräches zu übertragen. Die Funktion von RTP besteht hauptsächlich in der Übertragung echtzeitsensitiver Datenströme, während Protokolle wie das Session Description Protocol (SDP) oder das Real-Time Streaming Protocol (RTSP) der Steuerung und Kontrolle der Datenübertragung dienen.

Das Session Description Protocol (SDP) wird beschrieben im RFC4566. Dieses Protokoll wird innerhalb des SIP Protokolls verwendet, um die Parameter einer RTP-Kommunikation auszuhandeln. Hier werden die Capabilities der beteiligten Kommunikationsendgeräte mitgeteilt (supported Codecs, Codec Parameter, IP-Adressen und Ports).

In dem Signalisierungskanal 161 werden SIP/SDP-Datenpakete übertragen, die dem Aufbau und Steuerung der Verbindung und der Aushandlung der Verbindungsparameter dienen. Der Signalisierungskanal 161 verläuft durch das Mobilfunknetz 150, über das Gateway 152, durch die SIP-Umgebung 140 mit dem SIP-Provider 142, in welchem die Adresse des IP-Telefons 118 hinterlegt ist, durch das Internet 130 und erreicht den Router 112 des lokalen Netzes 110. Vom Router 112 aus wird der Signalisierungs-Datenstrom bzw. Signalisierungsstrom über das lokale Netz 110 an den SBC 116, die IP-PABX 114 und schließlich an das IP-Telefon 118 geleitet.

Der Sprachkanal 160 enthält die Sprachdaten, die durch ein hier nicht näher erläutertes Verfahren aus den Sprachinformationen eines Benutzers des Mobiltelefons 158 gewonnen und in RTP-Datenpakete aufgeteilt werden. Der Sprachkanal verläuft durch das Mobilfunknetz 150, über das Gateway 152, unter Umgehung des SIP-Providers 142 durch die SIP-Umgebung 140 und das Internet 130 und erreicht den Router 112 des lokalen Netzes 110. Vom Router 112 aus wird der Sprachdatenstrom bzw. Payload-Strom über das lokale Netz 110 an den SBC 116 und von dort, unter Umgehung der IP-PABX 114, direkt an das IP-Telefon 118 geleitet.

Die Umgehung sowohl des SIP-Providers 142 als auch der Telefonanlage (IP-PABX) 114 des lokalen Netzes 110 ist eine Eigenschaft der IP-Telefonie.

Die Telefon-Anlage (IP-PABX) 114 ist eingerichtet, Leistungsmerkmale für die mit ihr verbundenen Anschlüsse bzw. Endgeräte 118, 118' zu steuern. Ohne Beschränkung der Allgemeinheit können diese Leistungsmerkmale umfassen: Makeln, Partnerfunktion bzw. Chef-Sekretär-Funktion, Nachtschaltung, Rückruf, Anklopfen, Aufschalten, Konferenz, Holen, Rufumleitung, Rufweiterschaltung, Wartemusik, CAPI-Funktionen, Sprachmenü etc.

Manche, aber nicht notwendigerweise alle, der Leistungsmerkmale können von einem anderen, externen Teilnehmer ausgelöst werden. Hierzu macht man sich in an sich bekannter Weise das DTMF-Verfahren zu Nutze, das nachstehend anhand der Darstellung in Fig. 2 näher erläutert wird. Das Mobiltelefon 158 ist ein solcher externer Teilnehmer.

Fig. 2 ist eine schematische Darstellung eines Layouts eines gewöhnlichen Tastenwahlblocks 200 eines DMTF-fähigen Telefons. Das Mobiltelefon 158 weist eine Tastatur mit einem solchen Tastenwahlblock 200 auf.

Die Tastatur 200 weist zwölf Tasten 211, 212, 213, 221, 222, 223, 231, 232, 233, 241, 242, 243 auf. In den Bezugszeichen der Tasten gibt die zweite Stelle die Zeile und gibt die dritte Stelle die Spalte in dem Tastenwahlblock 200 gemäß der Darstellung in Fig. 2 wieder. Gemäß der Darstellung in Fig. 2 ist die Taste 211 der Ziffer "1", ist die Taste 212 der Ziffer "2", ist die Taste 213 der Ziffer "3", ist die Taste 221 der Ziffer "4", ist die Taste 222 der Ziffer "5", ist die Taste 223 der Ziffer "6", ist die Taste 231 der Ziffer "7", ist die Taste 232 der Ziffer "8", ist die Taste 233 der Ziffer "9", ist die Taste 241 dem Symbol " 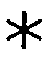 ", ist die Taste 242 der Ziffer "0", und ist die Taste 243 dem Symbol "#" zugeordnet. Die Tasten 212, ..., 232, welche die Ziffern "2" bis "9" repräsentieren, werden auch zur Codierung von Buchstaben a, ..., z verwendet, wobei eine Taste für eine Gruppe von drei oder vier Buchstaben verwendet wird. Die Zuordnung ist in Fig. 2 ebenfalls wiedergegeben.

Bei manchen, heute nicht mehr üblichen Tastaturen ist neben den vorstehend beschriebenen drei Spalten eine vierte Spalte von Tasten vorgesehen, welche die Buchstaben "A", "B", "C" und "D" repräsentieren; diese Tasten sind der Vollständigkeit halber in Fig. 2 gestrichelt dargestellt, aber nicht näher bezeichnet.

Bei dem Zweiton-Mehrfrequenzwahlverfahren stellt jede gewählte Ziffer bzw. Taste 211, ..., 243 ein Wählsignal dar, das durch eine Überlagerung zweier sinusförmiger Tonsignale repräsentiert wird, die von einer Vermittlungsstelle erkannt werden kann. Die Zuordnung der Frequenzen nach dem üblichen Standard ist aus nachstehender Tabelle 1 zu ersehen. Dabei sind die Tasten 211, ..., 243 durch die ihnen zugeordneten Ziffern bzw. Symbole wiedergegeben.

**Tabelle 1**

| | Spalte: | 1 | 2 | 3 | (4) |
|---|---|---|---|---|---|
| Reihe: | Frequenz: | **1209 Hz** | **1336 Hz** | **1477 Hz** | **1633 Hz** |
| 1 | **697 Hz** | "1" | "2" | "3" | ("A") |
| 2 | **770 Hz** | "4" | "5" | "6" | ("B") |
| 3 | **852 Hz** | "7" | "8" | "9" | ("C") |
| 4 | **941 Hz** | "∗" | "0" | "#" | ("A") |

Wie aus Tabelle 1 ersichtlich, repräsentiert jede Zeile eine vergleichsweise kleine Frequenz, also einen tiefen Ton, und repräsentiert jede Spalte eine vergleichsweise große Frequenz, also einen hohen Ton. Wird eine Taste gedrückt, werden der tiefere Ton der entsprechenden Zeile und der höhere Ton der entsprechenden Spalte mittels zweier Sinus-Oszillatoren für die Spalten- und Zeilenfrequenz erzeugt. Der daraus resultierende Mischton wird als Tonsignal, das als DTMF-Signal oder DTMF-Zeichen bezeichnet wird, über den Sprachkanal bzw. Payload-Kanal 160 (vgl. Fig. 1) einer Telefonverbindung übertragen. Die DTMF-Zeichen sind frequenzcodierte Signale im Sinne der Erfindung.

Zur Detektion der Frequenzen wird allgemein der Goertzel-Algorithmus angewendet, bei welchem einzelne Tonfrequenzen bzw. Spektralkomponenten auf der Grundlage der diskreten Fourier-Transformation erkannt werden. Grundlagen zum Goertzel-Algorithmus können American Math. Monthly, Band 65, Jahrgang 1958, Seiten 34 bis 35 entnommen werden; eine Übersicht ist unter dem genannten Stichwort auf dem deutschsprachigen, ausführlicher auf der englischsprachigem Eintrag unter www.wikipedia.org zu finden.

Wie bereits erwähnt, werden in einer VolP-Umgebung wie in Fig. 1 dargestellt der Payload-Kanal 160 und der Signalisierungskanal 161 auf getrennten Wegen übertragen. Da der die DTMF-Zeichen übertragende Payload-Kanal 161 in einer VolP-Umgebung auf direktem Weg unter Umgehung der Telefonanlage (IP-PABX) zum Teilnehmer geleitet wird, können die DTMF-Zeichen auf diesem Weg nicht zu der IP-PABX 114 gelangen und dort ausgewertet werden.

Gemäß der Darstellung in Fig. 1 weist der Router 112 eine Administrationsschnittstelle 112a auf. Über die Administrationsschnittstelle 112a des Routers 112 wird festgelegt, wie DTMF-Zeichen im Payload-Strom 160 zu identifizieren sind und die identifizierten DTMF-Zeichen über einen Zweigkanal 162 über das lokale Netz 110 an die IP-PABX 114 zu übertragen sind.

Die umgeleiteten DTMF-Zeichen werden anschließend von einer Empfangseinrichtung oder einem Empfangsprozess (engl. DTMF-Receiver) der IP-PABX 114 entgegengenommen und gemäß einer Signalisierungsaushandlung vorverarbeitet und an die Vermittlungstechnik weitergereicht. Diese steuert sodann Leistungsmerkmale auf der Grundlage empfangener DTMF-Zeichen.

Es ist festzuhalten, dass im Router 112 selbst nur erkannt wird, dass bzw. ob es sich bei UDP- bzw. RTP-Paketen um DTMF-Zeichen handelt. Um welches DTMF-Zeichen es sich handelt, muss im Router 112 nicht erkannt werden. Bei der identifizierung im Router 112 kann vorteilhaft ausgenutzt werden, dass RTP-Pakete, die DTMF-Zeichen enthalten, im RTP-Codierungsprozess als solche gekennzeichnet werden, etwa durch Angabe eines Kennzeichens im Header. Beispielsweise kann die Angabe "RTP 98" im Header eines RTP-Pakets angeben, dass es sich um ein RTP-Paket mit DTMF-Zeichen handelt. Daher kann der Identifizierungsprozess im Router 112 einfacher ausgestaltet sein als ein Erkennungsprozess auf der Grundlage der Signalisierung gemäß z.B. RFC 2833 oder eines vergleichbaren Algorithmus, der in der IP-PABX 114 zur Erkennung von DTMF-Zeichen implementiert ist.

Die durch den Router 112 identifizierten und an die IP-PABX 114 übertragenen RTP-Pakete (DTMF-Zeichen) können in dem Payload-Strom verbleiben. In einer Abwandlung werden diese Pakete (DTMF-Zeichen) aus dem RTF-Strom im Payload-Kanal 160 stromabwärts des Routers 112 (bezogen auf die Übertragungsrichtung des Payload-Stroms) entfernt.

Weitere Einzelheiten des Verfahrens werden anhand einer detaillierten Darstellung der IP-PABX 114 und des Routers 112 beschrieben.

Fig. 3 ist ein schematisches Blockschaubild der IP-PABX 114 und des Routers 112 in dem lokalen Netz 100. Es versteht sich, dass sich die Darstellung in Fig. 3 auf diejenigen Elemente der genannten Geräte beschränkt, die für das Verständnis der Erfindung hilfreich sein können. Es versteht sich weiterhin, dass die genaue Anordnung und Wirkungsweise der dargestellten Elemente allein der Veranschaulichung dient und nicht zwingend sein muss.

Gemäß der Darstellung in Fig. 3 weist der Router 112 neben der bereits beschriebenen Administrationsschnittstelle 112a ein Socket-Interface 321 und einen Speicherbereich 322 auf. Ein Socket stellt einen Endpunkt bei einer Netzwerkkommunikation dar. Der Router 112 weist eine sichere Fernprogrammierungsumgebung wie etwa ssh (secure shell, eine sichere Oberfläche zur Kommandozeileninterpretation) auf, wodurch der Router 112 mittels der Administrationsschnittstelle 112a von entfernten Instanzen (remote) gesteuert bzw. fernprogrammiert werden kann. Das Socket Interface 321 ist eine Programmierschnittstelle für TCP/IP-Netzwerke, d.h. es definiert eine Reihe von Softwarefunktionen (Routinen), mit denen Programmierer Anwendungen für TCP/IP-Netzwerke entwickeln können. Zu den Aufgaben, die einem Socket Interface zufallen, gehören die Erzeugung und Konfigurierung des Socket, die Übertragung von Daten durch das Socket, der Empfang von Daten von einem Socket und die Verwendung des Sockets innerhalb von Serverprogrammen. Das Socket-Interface 321 ist die Schnittstelle zum lokalen Netz 100 und weist eine Verbindung zu dem Speicherbereich 322 auf. In dem Speicherbereich 322 sind beispielsweise IP-Tabellen abgelegt. Die Administrationsschnittstelle 112a greift auf den Speicherbereich 322 zu und ist über das Socket-Interface 321 verbunden.

Wie in Fig. 3 weiter dargestellt, weist die IP-PABX 114 einen Betriebskern 341, ein Socket-Interface 342, eine SIP-Bereich 343, einen Endpoint Registration Handler (ERH) 344, einen SIP-Provider-Proxy (SPP) 345, einen DTMF-Empfangsprozess (Software RTP-DTMF receiver) 346, einen LAN Leg Controller (LLC) 347, einen IP Network Controller (IPNC) 348 und ein System-Interface 349 auf.

Der Betriebskern 341 ist die Ebene des Betriebssystems der IP-PABX 114 und arbeitet auf der Basis von Linux. In der Figur sind Verbindungen zu dem Socket-Interface 342 und dem SIP-Bereich 343 dargestellt; tatsächlich ist der Betriebskern 341 die Grundlage aller Prozesse der IP-PABX 114.

Das Socket-Interface 342 ist die Schnittstelle zum lokalen Netz 100 und weist die Funktionen gemäß vorstehender Beschreibung für das Socket-Interface 321 des Routers 112 auf. Im Zusammenhang mit der Erfindung ist insbesondere die Verbindung mit dem DTMF-Empfangsbereich 346 von Interesse.

Der SIP-Bereich 343 stellt einen Bereich zur Vereinbarung bzw. Aushandlung von Kommunikationsmodalitäten auf der Grundlage des Session Initiation Protocol (SIP) dar. Er ist mit dem Betriebskern 341, dem Endpoint Registration Handler (ERH) 344 und dem SIP-Provider-Proxy 345 verbunden.

Der ERH 344 ist ein Bereich zur Handhabung von Endpunktregistrierungen. Ein Endpunkt ist ein adressierbarer Knoten, der eine Kommunikationsinstanz in einem Kommunikationsnetz darstellt, und kann ein SIP-Endpunkt oder ein Proxy-Endpunkt sein. Ein SIP-Endpunkt wird verwendet, um Benutzer, Geräte oder Dienste darzustellen, die in Aktivitäten über IP-Netze einbezogen werden können. Sie werden durch ihre SIP-URI (URI: Uniform Resource Identifier bzw. Quelladresse) identifiziert, die etwa die Form "sip:user@company.com" aufweisen kann. Proxy-Endpunkte werden verwendet, um ein PSTN-(Public Switched Telephone Network)-Telefon im Rahmen einer Gesprächsfernsteuerung oder einer Kommunikation zwischen Computer und Telefon darzustellen. Proxy-Endpunkte werden durch eine SIP-URI und eine TEL-URI identifiziert, wobei die TEL-URI etwa die Form "tel:+49891234567890" aufweist und die SIP-URI etwa die Form "sip:+49891234567890@cstaDomain" aufweisen kann. D.h., die URls eines Proxy-Endpunkts weisen die Form einer internationalen Telefonnummer auf, wobei die Domäne sich auf die CSTA-(Computer Supported Telecommunications Application)-Domäne bezieht. Um einen entfernten Proxy-Endpunkt in einer Sitzung von Computer zu Telefon anzugeben, ist nur die SIP-URI erforderlich. Die TEL-URI wird zusätzlich benötigt, um einen lokalen Proxy-Endpunkt zu erzeugen. Der ERH 344 ist insbesondere mit dem SIP-Bereich 343, dem LLC 347 und dem System-Interface 349 verbunden.

Der SIP-Provider-Proxy (SPP) 345 fungiert als ein Benutzer-Agent in der SIP-Kommunikation, der insbesondere Anforderungen bzw. Anfragen (Requests) und Rückantworten bzw. Antworten (Responses) auf der Grundlage des SIP erzeugt, sendet und verwaltet. Der SPP 345 ist auch in der Lage, in dem SIP-Strom eingebettete SDP-Daten zu interpretieren. Der SPP 345 ist mit dem SIP-Bereich 343, mit dem LLC 347 und mit dem DTMF-Empfangsbereich 346 verbunden.

Der DTMF-Empfangsbereich (DTMF receiver) 346 dient dem Empfang und der Entschlüsselung von DMTF-Zeichen. Die Entschlüsselung von DMTF-Zeichen wurde bereits beschrieben. Der DTMF-Empfangsbereich 346 steht mit dem Socket-Interface 342, dem SIP-Provider-Proxy 345 und dem LLC 347 in Verbindung.

Der LAN Leg Controller (LLC) 347 ist ein Bereich zur Steuerung eines LAN-Zweiges. Er ist mit dem ERH 344, dem SPP 345, dem DTMF-Empfangsbereich 346 und dem IPNC 348 verbunden. Der IPNC (Internet Protocol Network Controller bzw. IP-Netzcontroller) 348 ist für bestimmte Steuerungsaufgaben des IP-Netzes vorgesehen wie etwa eine Überbrückung (bridging) zwischen drahtgebundenen und drahtlosen Abschnitten des Netzes u.a. Er ist mit dem LLC 347, dem dem DTMF-Empfangsbereich 346 und dem System-Interface 349 verbunden.

Das System-Interface 349 ist eine Schnittstelle, die beispielsweise eine Verbindung mit Peripheriegeräten erlaubt. Das System-Interface 349 kann etwa eine serielle oder parallele, eine drahtgebundene oder drahtlose Schnittstelle sein und auf der Grundlage von Standards wie etwa SCSI, USB, FireWire oder dergleichen arbeiten. Es können mehrere, auch unterschiedliche, System-Interfaces vorhanden sein. Das System-Interface 349 ist intern insbesondere mit dem ERH 344 und dem IPNC 348 verbunden.

Wie in Fig. 3 weiter dargestellt, ist ein Feature-Prozess 350 über ein eigenes System-Interface 351 mit dem System-Interface 349 der IP-PABX 114 verbunden. Der Feature-Prozess 350 ist ein Bereich zur Steuerung von Leistungsmerkmalen.

Beim Aufbau einer Verbindung zwischen dem Mobiltelefon 158 und dem VolP-Telefon 118 (vgl. Fig. 1) werden die Anfragen und Antworten zum Verbindungsaufbau über den Signalisierungskanal 161 gemäß SIP-Protokoll ausgetauscht. Auf der Seite der IP-PABX 114 werden empfangene SIP-Datenströme aus dem lokalen Netz 100 über das Socket-Interface 342 an den SIP-Bereich 343 geleitet und werden umgekehrt in dem SIP-Bereich 343 erzeugte SIP-Daten über das Socket-Interface 342 in das lokale Netz 100 geleitet.

Anhand von Parametern im SIP bzw. in dem in SIP eingebetteten SDP (vgl. hierzu die vorstehenden Erläuterungen der Protokolle) entscheidet der Feature-Prozess 350, ob die Telekommunikationsverbindung den Empfang von DTMF-Zeichen erforderlich machen könnte. Hierzu speichert der SPP 345 die für die DTMF-Erkennung notwendigen Informationen. Die Entscheidung kann beispielsweise auf der Grundlage eines Parameters im SDP-Strom, der angibt, dass das externe Endgerät (das Mobiltelefon 158 in Fig. 1) ein DTMF-fähiges Endgerät ist, getroffen werden. Die Entscheidung kann auch auf der Grundlage eines Parameters im SDP-Strom, der angibt, dass DTMF-Zeichen zur Übertragung über den RTP-Strom anstehen, oder aufgrund einer an das externe Endgerät (Mobiltelefon 158) gesendeten Aufforderung, eine Eingabe über die Tastatur (Tastenwahlblock 200 in Fig. 2) zu tätigen, getroffen werden.

Falls die Entscheidung, ob die Telekommunikationsverbindung den Empfang von DTMF-Zeichen erforderlich machen könnte, positiv getroffen wird, stellt der SPP 345 dem DTMF-Empfangsbereich 346 eine Regel 345a zur Übertragung an den Router 112 über die Administrationsschnittstelle 112a bereit. Hierzu wird die Regel 345a von dem DTMF-Empfangsbereich 346 über das Socket-Interface 342 und das lokale Netz 100 an das Socket-Interface 321 des Routers 112 übertragen, welcher die Regel 345a über die Administrationsschittstelle 112a weiterleitet.

Die Regel 345a wird über die Administrationsschittstelle 112a aktiviert und im Router 112 implementiert. Anhand der implementierten Regel 345a überwacht der Router 112 den über den Payload-Kanal 160 empfangenen RTP-Datenstrom, erkennt darin enthaltene spezielle RTP-Paket (DTMF-Zeichen), kopiert diese in einen Zwischenspeicherbereich etwa innerhalb des Speicherbereichs 322, baut einen Zweigkanal 162 (vgl. Fig. 1) über das lokale Netz 100 zwischen dem Router 112 und der IP-PABX 114 auf, überträgt die kopierten DTMF-Zeichen über den Zweigkanal 162 an die IP-PABX 114 und löscht die übertragenen DTMF-Zeichen aus dem Zwischenspeicherbereich. Genauer gesagt werden die kopierten DTMF-Zeichen über das Socket-Interface 321 und das lokale Netz 100 übertragen, in dem Socket-Interface 342 der IP-PABX 114 empfangen und an den DTMF-Empfangsbereich 346 geleitet. Man beachte, dass der Zweigkanal 162 von dem Payload-Kanal 160 stromabwärts des Routers 112 unabhängig ist und den SBC 116 umgeht, also direkt zwischen dem Router 112 und der IP-PABX 114 aufgebaut wird (vgl. Fig. 1).

In dem DTMF-Empfangsbereich 346 werden die empfangenen DTMF-Zeichen entschlüsselt und an den LLC 347 geleitet. Der LLC 347 interpretiert die entschlüsselten DTMF-Zeichen und entscheidet daraufhin gegebenenfalls, ein Leistungsmerkmal zu aktivieren, zu deaktivieren oder sonst zu steuern. Wenn beispielsweise die empfangenen und entschlüsselten DTMF-Zeichen so interpretiert werden, dass der Feature-Prozess 350 gesteuert werden soll, wird über den LLC 347 bzw. den IPNC 348 ein entsprechendes Steuersignal bzw. eine Steueranweisung erzeugt, welches über das System-Interface 349 an das System-Interface 351 des Feature-Prozesses 350 übertragen wird. Der Feature-Prozess 350 interpretiert die Steueranweisung und führt eine darin angegebene Aktion durch.

Auf die oben beschriebene Weise ist es auch unter VolP-Bedingungen auf einfache Weise möglich, Leistungsmerkmale einer Telefonanlage während eines Gesprächs durch Benutzereingaben einer Gegenstelle mittels im Payload-Kanal übertragener DTMF-Zeichen zu steuern. Hierzu werden die DTMF-Zeichen auf der Routing-Ebene aus dem direkten Sprachkanal gezielt umgeleitet, ohne die komplette Sprachverbindung umleiten zu müssen.

Der Router 112 kann vorab mit einer Regel entsprechend der Regel 345a in Fig. 3 versehen sein und entscheidet anhand von Daten aus dem SIP/SDP-Strom und/oder dem RTF-Strom selbst, die Regel zur Abzweigung der DTMF-Zeichen und Übertragung an die IP-PABX 114 anzuwenden. Die Abzweigung kann auch obligatorisch sein, also für jedes über den Router 112 laufenden DTMF-Zeichen ohne weitere Entscheidung erfolgen.

Die erkannten DTMF-Zeichen können in SDP-Anweisungen umgesetzt und stromabwärts des Routers 112 über den Signalisierungskanal 161 an die IP-PABX übertragen werden. In diesem Fall werden die DTMF-Zeichen im SIP/SDP-Strom über den SBC 116 geleitet.

Die Regel zur Abzweigung der DTMF-Zeichen kann anstelle des Routers 112 in dem VolP-Sitzungssteuergerät 16 implementiert sein.

Wie vorstehend beschrieben, ist die IP-Telefonanlage (IP-PABX) 114 eine Vermittlungseinrichtung im Sinne der vorliegenden Erfindung. Die Erfindung ist jedoch nicht auf eine IP-PABX als Vermittlungseinrichtung beschränkt.

Die oben beschriebene SBC 116 ist nicht in allen Fällen erforderlich.

Das IP-Telefon 118 kann auch auf andere Weise als über das lokale Netz 110 mit der IP-PABX 1 4 verbunden sein, etwa über USB, eine serielle oder parallele Verbindung, SCSI oder einen S 0-Bus. Funktionen des IP-Telefons 118 können in der IP-PABX 114 implementiert sein. Wesentlich ist, dass die Vermittlungsstelle (IP-PABX 114) den Payload-Kanal 160 der Telekommunikationsverbindung an das IP-Telefon 118 vermittelt.

Die Erfindung wurde anhand der IP-Telefonie (VolP) beispielhaft dargestellt. Sie ist jedoch auch auf andere Telekommunikationsdienste wie etwa Fax over IP (FolP) anwendbar. Dabei können Benutzerangaben über DTMF-Zeichen verwendet werden, um Leistungsmerkmale eines IP-Faxgerätes zu steuern.

Obschon VolP heutzutage über RTP-basierte Protokolle abgewickelt wird und die vorliegende Erfindung anhand dieser beispielhaften Konstellation beschrieben wurde, ist die Erfindung auch auf andere Protokolle, so z. B. ein Vorgängerprotokoll wie etwa H.323 oder weiterentwickelte Protokolle gleichermaßen anwendbar. Es versteht sich auch, dass die Funktionsweise der vorliegenden Erfindung nicht auf den genauen Verlauf der im Ausführungsbeispiel skizzierten Übertragungswege der Signalisierungs- und Payload-Kanäle beschränkt ist.

Wie vorstehend beschrieben, ist das Mobilfunknetz 150 (GSM) ein Netz im Sinne der Erfindung. Die Erfindung ist auch auf andere Netze als GSM anwendbar, z.B. ein Festnetz, das an das Internet gekoppelt ist, wie etwa ISDN, oder ein anderes Mobilfunknetz wie etwa UMTS oder ein Satellitenfunknetz.

Die Aufteilung der Telekommunikationsverbindung in Payload-Kanal 160 und Signalisierungskanal 161 muss nicht im Mobiltelefon 158 selbst vorgenommen werden, sondern kann z. B. erst in dem Gateway 152 erfolgen.

Der Router 112 ist, wie schon erwähnt, eine Netzkopplungseinrichtung im Sinne der Erfindung. Der Router 112 kann durch ein Gateway oder eine andere Einrichtung zur Kopplung verschiedener Netze ersetzt sein. In Bezug auf die Erkennung und Abzweigung von DTMF-Zeichen ist der Router 112 ganz allgemein eine Signalverarbeitungseinrichtung im Sinne der Erfindung, die getrennt von der PABX 114 vorgesehen ist. Die Abzweigung der DTMF-Zeichen aus dem Payload-Strom kann an jedem zentralen Punkt im lokalen Netz 110 erfolgen, der eine Verbindung LAN/WAN herstellt. Dieser zentrale Punkt kann ein Router, ein Gateway, eine Firewall oder ein SBC sein. Die Funktionen von Netzkopplung und Identifizierung von DTMF-Zeichen müssen nicht notwendigerweise in einem Gerät vereinigt sein. Eine Signalverarbeitungseinrichtung zur Identifizierung und Abzweigung von DTMF-Zeichen kann als Teil oder Modul einer Netzkopplungseinrichtung ausgebildet oder (als ein separates Gerät) einer Netzkopplungseinrichtung verbindungstechnisch zugeordnet sein. Von besonderem Vorteil ist es, wenn eine Signalverarbeitungseinrichtung wie etwa ein Router über eine Administrationsschnittstelle (ssh - secure shell, SNMP - Simple Network Management Protocol oder dergleichen) ferngesteuert bzw. fernprogrammiert werden kann, um eine Regel zum Abzweigen der DTMF-Zeichen aus der Ferne durch die IP-PABX 114 implementieren zu können. Die Übertragung der identifizierten DTMF-Zeichen von dem Router 112 an die IP-PABX 114 kann auch auf direktem Weg, unter Umgehung des lokalen Netzes 110, erfolgen. Beispielsweise können Router 112 und IP-PABX 114 in einem Schaltschrank oder einem gemeinsamen Gehäuse untergebracht und über einen internen Bus oder eine serielle oder parallele Verbindungsleitung miteinander verbunden sein, über welche der Zweigkanal 162 mit dem DTMF-Strom aufgebaut wird.

Gemäß dem beschriebenen Ausführungsbeispiel ist der Feature-Prozess 350 als ein eigenständiges Gerät oder Bauteil oder Einschub verwirklicht, das bzw. der über ein System-Interface 351, 349 mit der IP-PABX 114 verbunden ist. Der Feature-Prozess kann auch als Bereich innerhalb der IP-PABX 114 verwirklicht sein.

In vorstehend beschriebenem Ausführungsbeispiel arbeitet der Betriebskern 341 der IP-PABX 114 auf der Grundlage von Linux. Es versteht sich, dass andere Betriebssysteme wie etwa Windows, MAC-OS, DOS, UNIX, OS/2 oder andere gleichermaßen verwendbar sein können.

Die Elemente oder Bereiche, die im Zusammenhang mit dem Router 112 oder der IP-PABX 114 oder dem Feature-Prozess 350 beschrieben wurden, können als Hardware-Einheiten oder Software-Einheiten verwirklicht sein. Insoweit können die insbesondere in Fig. 3 dargestellten und in diesem Zusammenhang beschriebenen Verbindungen physikalische oder programm-/datentechnische sein.

Die Erfindung sieht zusammengefasst vor, frequenzcodierte Signale wie etwa DTMF-Zeichen auf der Routingebene aus dem direkten Sprachkanal gezielt umzuleiten, ohne dabei jedoch die komplette direkte Sprachverbindung umleiten zu müssen.

Hierbei können zwei Erkenntnisse ausgenutzt werden. Zum Einen gibt es immer einen zentralen Punkt in einem lokalen Netz (LAN - Local Area Network), der eine Verbindung vom LAN zum Außennetz (WAN - Wide Area Network) herstellt. Einen solchen zentralen Punkt kann beispielsweise ein Router, ein SBC (Session Border Controller), eine Firewall, ein Gateway oder dergleichen bilden. Auf einem solchen Gerät gibt es in aller Regel auch Administrationsschnittstellen (z.B. ssh - secure shell, SNMP - Simple Network Management Protocol) welche aus der Ferne (remote) gesteuert werden können. Zum anderen kann die Art der DTMF-Zeichen-Signalisierung im RTP-Strom während der Verbindungsaufbaus im Signalisierungsprotokoll ausgehandelt werden. Entscheidet nun die Vermittlungstechnik, dass für ein Gespräch eine DTMF-Zeichen-Erkennung notwendig ist, kann über die Administrationsschnittstelle eine Regel im Router (Netzkopplungseinrichtung) gesetzt werden, welche spezielle RTP-Pakete (DTMF-Zeichen) im Sprachkanal erkennt und an ein neues Ziel weiterleitet. Wenn durch die Vermittlungstechnik gewünscht, kann sogar das Zeichen auch gleich ganz aus dem Sprachkanal entfernt werden. Das umgeleitete DTMF-Zeichen kann anschließend von einem Empfangsprozess in einem DMTF-Empfänger entgegengenommen, gemäß der Signalisierungsaushandlung vorverarbeitet und anschließend an die Vermittlungstechnik weitergereicht werden. Es versteht sich, dass die Art und Weise des Zugriffs auf den Router im System zuvor konfiguriert werden können (z.B. IP-Adresse des Routers, Passwort etc.).

Es ist indessen darauf hinzuweisen, dass die vorliegende Erfindung allein durch die unabhängigen Patentansprüche definiert ist und die vorstehende Beschreibung von Ausführungsbeispielen, Abwandlungen und Weiterbildungen nur der beispielhaften Illustration dient. Nicht alle vorstehend beschriebenen Elemente sind für die Anwendung und Ausführung der Erfindung zwingend erforderlich.

### Liste der Bezugszeichen

110 Nahbereichsnetz (Lokales Netz, LAN)
112 Router
112a Administrationsschnittstelle
114 Telefonanlage (IP-PABX)
116 VolP-Sitzungssteuergerät (Session Border Controller, SBC)
118 VolP-Telefon (Endgerät)
118' Endgerät
120 Weitbereichsnetz (WAN)
130 Internet
140 SIP-Umgebung
142 SIP-Provider
150 Mobilfunknetz (Zeitmultiplex, TDM)
152 Gateway
158 Mobiltelefon
160 Payload-Kanal
161 Signalisierungskanal
162 Zweigkanal
200 Tastenwahlblock
211, 212, ..., 243 Tasten
321 Socket-Interface
322 Speicherbereich
341 Betriebskern
342 Socket-Interface
343 SIP-Bereich
344 Endpoint Registration Handler (ERH)
345 SIP-Provider-Proxy (SPP)
345a DTMF-Regel
346 DTMF-Empfangsbereich (DTMF receiver)
347 LAN Leg Controller (LLC)
348 IP-Netzcontroller (IPNC)
349 System-Interface (SI)
350 Feature-Prozess
351 System-Interface

Die vorstehende Liste der Bezugszeichen ist Bestandteil der Beschreibung.

## Patentansprüche

1. Verfahren zum Handhaben einer Telekommunikationsverbindung zwischen wenigstens zwei Teilnehmern (118, 158),
wobei die Telekommunikationsverbindung einen Signalisierungskanal (161) zur Übertragung eines Signalisierungsstroms und einen Payload-Kanal (160) zur Übertragung eines Payload-Stroms aufweist,
wobei frequenzcodierte Signale in dem Payload-Strom übertragen werden,
wobei wenigstens ein Teilnehmer (118) der wenigstens zwei Teilnehmer (118, 158) einem Netz (100, 110) zugeordnet ist, das eine Vermittlungseinrichtung (114) und eine von der Vermittlungseinrichtung (114) getrennt vorgesehene Signalverarbeitungseinrichtung (112) aufweist, wobei
die frequenzcodierten Signale in dem Payload-Strom durch die Signalverarbeitungseinrichtung (112) erkannt und unabhängig von dem Payload-Strom an die Vermittlungseinrichtung (114) übertragen werden,
**dadurch gekennzeichnet, dass**
anhand von Parametern in Session Initiation Protocol-, SIP-, Signalen bzw. in in den SIP-Signalen eingebetteten Session Description Protocol-, SDP-, Signalen in einem Feature-Prozess (350) entschieden wird, ob die Telekommunikationsverbindung den Empfang von Dual Tone Multi-Frequency-, DTMF-, Zeichen erforderlich machen könnte, dass
falls die Entscheidung positiv getroffen wird,
durch die Vermittlungseinrichtung (114) mittels Fernprogrammierung eine Regel (345a) in der Signalverarbeitungseinrichtung (112) gesetzt wird, welche die Signalverarbeitungseinrichtung (112) in die Lage versetzt und/oder anweist, frequenzcodierte Signale aus dem Payload-Strom zu erkennen und auszufiltern.

2. Verfahren gemäß Anspruch 1, **dadurch gekennzeichnet, dass** die Regel (345a) über die Administrationsschnittstelle (112a) aktiviert und in der als Router ausgebildeten Signalverarbeitungseinrichtung (112) implementiert wird, dass anhand der implementierten Regel (345a) der Router den über den Payload-Kanal (160) empfangenen RTP-Datenstrom überwacht, darin enthaltene spezielle Real Time Transport Protocol-, RTP-, Pakete erkennt, diese in einen Zwischenspeicherbereich kopiert, einen Zweigkanal (162) über das Netz (100, 110) zwischen dem Router und einer Private Branch Exchange-, PBX-, Private Automated Branch Exchange-, PABX-, oder Internet Protocol-, IP-, PABX-Vermittlungseinrichtung (114) aufbaut, die kopierten DTMF-Zeichen über den Zweigkanal (162) an die Vermittlungseinrichtung (114) überträgt und die übertragenen DTMF-Zeichen aus dem Zwischenspeicherbereich löscht.

3. Verfahren gemäß Anspruch 1 oder 2, **dadurch gekennzeichnet, dass** das Netz (100, 110) ein lokales Netz, insbesondere ein Local Area Network, LAN, oder Wireless Local Area Network, W-LAN ist.

4. Verfahren gemäß einem der vorstehenden Ansprüche, **dadurch gekennzeichnet, dass** die frequenzcodierten Signale verwendet werden, um Leistungsmerkmale der Vermittlungseinrichtung (114) zu steuern.

5. Verfahren gemäß einem der vorstehenden Ansprüche, **dadurch gekennzeichnet, dass** die Signalverarbeitungseinrichtung (112) eine Netzkopplungseinrichtung, ein Router, ein Gateway oder Teil einer Netzkopplungseinrichtung ist, oder einer Netzkopplungseinrichtung verbindungstechnisch zugeordnet ist, die an einer zentralen Stelle in dem Netz (100, 110) vorgesehen ist.

6. Verfahren gemäß einem der vorstehenden Ansprüche, **dadurch gekennzeichnet, dass** die Kommunikationsverbindung über im Signalisierungskanal (161) übertragene SIP/SDP-Signale aufgebaut wird und ein Nutzdatenstrom über RTP-Signale im Payload-Kanal (160) übertragen wird, wobei die Kommunikationsverbindung vorzugsweise eine Voice over Internet Protocol-, VoIP-, Verbindung ist.

7. Verfahren gemäß einem der vorstehenden Ansprüche, **dadurch gekennzeichnet, dass** die frequenzcodierten Signale durch die Signalverarbeitungsanlage aus dem stromabwärtigen Payload-Strom entfernt werden.

8. Verfahren gemäß einem der vorstehenden Ansprüche, **dadurch gekennzeichnet, dass** der Payload-Kanal (160) unter Umgehung der Vermittlungseinrichtung (114) übertragen wird.

9. Verfahren gemäß einem der vorstehenden Ansprüche, **dadurch gekennzeichnet, dass** der Signalisierungskanal (161) über die Vermittlungseinrichtung (114) geleitet wird.

10. Verfahren gemäß einem der vorstehenden Ansprüche, **dadurch gekennzeichnet, dass** zur Übertragung der frequenzcodierten Signale an die Vermittlungseinrichtung (114) eine eigene Verbindung bzw. ein eigener Verbindungskanal aufgebaut wird.

11. Verfahren gemäß einem der Ansprüche 1 bis 9, **dadurch gekennzeichnet, dass** die frequenzcodierten Signale von der Signalverarbeitungseinrichtung (112) über den Signalisierungskanal (161) an die Vermittlungseinrichtung (114) übertragen werden.

12. Telekommunikationsanordnung zum Handhaben einer Telekommunikationsverbindung zwischen wenigstens zwei Teilnehmern (118, 158), wobei die Telekommunikationsverbindung einen Signalisierungskanal (161) zur Übertragung eines Signalisierungsstroms und einen Payload-Kanal (160) zur Übertragung eines Payload-Stroms aufweist,
wobei frequenzcodierte Signale in dem Payload-Strom übertragen werden, wobei wenigstens ein Teilnehmer (118) der wenigstens zwei Teilnehmer (118, 158) einem Netz (100, 110) zugeordnet ist, das eine Vermittlungseinrichtung (114) und eine von der Vermittlungseinrichtung (114) getrennt vorgesehene Signalverarbeitungseinrichtung (112) aufweist, wobei
die frequenzcodierten Signale in dem Payload-Strom durch die Signalverarbeitungseinrichtung (112) erkannt und unabhängig von dem Payload-Strom an die Vermittlungseinrichtung (114) übertragen werden, **dadurch gekennzeichnet, dass**
die Telekommunikationsanordnung derart konfiguriert ist, dass anhand von Parametern in Session Initiation Protocol-, SIP-, Signalen bzw. in in den SIP-Signalen eingebetteten Session Description Protocol-, SDP-, Signalen in einem Feature-Prozess (350) entschieden wird, ob die Telekommunikationsver-bindung den Empfang von Dual Tone Multi-Frequency-, DTMF-, Zeichen erforderlich machen könnte, dass
falls die Entscheidung positiv getroffen wird,
dass die Vermittlungseinrichtung (114) derart konfiguriert ist, dass mittels Fernprogrammierung eine Regel (345a) in der Signalverarbeitungseinrichtung (112) gesetzt wird, welche die Signalverarbeitungseinrichtung (112) in die Lage versetzt und/oder anweist, frequenzcodierte Signale aus dem Payload-Strom zu erkennen und auszufiltern.

13. Vermittlungseinrichtung (114) zum Handhaben einer Telekommunikationsverbindung in einer Telekommunikationsanordnung zwischen wenigstens zwei Teilnehmern (118, 158) in einem Kommunikationsnetz, wobei die Telekommunikationsverbindung einen Signalisierungskanal (161) zur Übertragung eines Signalisierungsstroms und einen Payload-Kanal (160) zur Übertragung eines Payload-Stroms aufweist,
wobei frequenzcodierte Signale in dem Payload-Strom übertragen werden, wobei wenigstens ein Teilnehmer (118) der wenigstens zwei Teilnehmer (118, 158) einem Netz (100, 110) zugeordnet ist, das eine Vermittlungseinrichtung (114) und eine von der Vermittlungseinrichtung (114) getrennt vorgesehene Signalverarbeitungseinrichtung (112) aufweist, wobei
die frequenzcodierten Signale in dem Payload-Strom durch die Signalverarbeitungseinrichtung (112) erkannt und unabhängig von dem Payload-Strom an die Vermittlungseinrichtung (114) übertragen werden,
**dadurch gekennzeichnet, dass** die Vermittlungseinrichtung (114) derart konfiguriert ist, dass mittels Fernprogrammierung durch die Vermittlungseinrichtung (114) eine Regel (345a) in der Signalverarbeitungseinrichtung (112) gesetzt wird, welche die Signalverarbeitungseinrichtung (112) in die Lage versetzt und/oder anweist, frequenzcodierte Signale aus dem Payload-Strom zu erkennen und auszufiltern, wenn Parameter in Session Initiation Protocol-, SIP-, Signalen bzw. in in den SIP-Signalen eingebetteten Session Description Protocol-, SDP-, Signalen angeben, dass die Telekommunikationsverbindung den Empfang von Dual Tone Multi-Frequency-, DTMF-, Zeichen erforderlich machen könnte.

14. Netzkopplungseinrichtung zum Handhaben einer Telekommunikationsverbindung in einer Telekommunikationsanordnung zwischen wenigstens zwei Teilnehmern (118, 158) in einem Kommunikationsnetz, wobei die Telekommunikationsverbindung einen Signalisierungskanal (161) zur Übertragung eines Signalisierungsstroms und einen Payload-Kanal (160) zur Übertragung eines Payload-Stroms aufweist,
wobei frequenzcodierte Signale in dem Payload-Strom übertragen werden, wobei wenigstens ein Teilnehmer (118) der wenigstens zwei Teilnehmer (118, 158) einem Netz (100, 110) zugeordnet ist, das eine Vermittlungseinrichtung (114) und eine von der Vermittlungseinrichtung (114) getrennt vorgesehene Signalverarbeitungseinrichtung (112) als Teil der Netzkopplungseinrichtung aufweist,
wobei
die frequenzcodierten Signale in dem Payload-Strom durch die Signalverarbeitungseinrichtung (112) erkannt und unabhängig von dem Payload-Strom an die Vermittlungseinrichtung (114) übertragen werden,
**dadurch gekennzeichnet, dass** die Signalverarbeitungseinrichtung (112) derart konfiguriert ist, dass mittels Fernprogrammierung durch die Vermittlungseinrichtung (114) eine Regel (345a) in der Signalverarbeitungseinrichtung (112) gesetzt wird, welche die Signalverarbeitungseinrichtung (112) in die Lage versetzt und/oder anweist,
frequenzcodierte Signale aus dem Payload-Strom zu erkennen und auszufiltern, wenn Parameter in Session Initiation Protocol-, SIP-, Signalen bzw. in in den SIP-Signalen eingebetteten Session Description Protocol-, SDP-, Signalen angeben, dass die Telekommunikationsverbindung den Empfang von Dual Tone Multi-Frequency-, DTMF-, Zeichen erforderlich machen könnte.

## Claims

1. A method for handling a telecommunications link between at least two subscribers (118, 158), wherein the telecommunications link has a signaling channel (161) for transmitting a signaling stream and a payload channel (160) for transmitting a payload stream, wherein frequency-coded signals are transmitted in the payload stream,
wherein at least one subscriber (118) of the at least two subscribers (118, 158) is assigned to a network (100, 110), comprising a switching device (114) and a signal processing device (112), which is separate from the switching device (114),
wherein the frequency-coded signals in the payload stream are detected by the signal processing device (112) and transmitted to the switching device (114) independently of the payload stream,
**characterized in that** a decision is made as on the basis of parameters in session initiation protocol (SIP) signals and/or in session description protocol (SDP) signals embedded in the SIP signals in a feature process (350), as to whether the telecommunications link might necessitate the reception of dual tone multifrequency (DTMF) codes, if the decision made is positive, in the signal processing device (112), a rule (345a) is set by the switching device (114) by means of remote programming, enabling and/or instructing the signal processing device (112) to detect frequency-coded signals and filter them out of the payload stream.

2. The method according to claim 1, **characterized in that** the rule (345a) is activated via the administration interface (112a) and is implemented in the signal processing device (112), which is embodied as a router; on the basis of the implemented rule (345a), the router monitors the RTP data stream received over the payload channel (160), detects special real time transport protocol (RTP) packets contained therein, copies them to a temporary memory area, establishes a branch channel (162) over the network (100, 110) between the router and a private branch exchange (PBX), a private automated branch exchange (PABX) or Internet protocol (IP), PABX switching device (114), which transmits the copied DTMF codes over the branch channel (162) to the switching device (114) and deletes the transmitted DTMF codes from the temporary memory area.

3. The method according to claim 1 or 2, **characterized in that** the network (100, 110) is a local network, in particular a local area network (LAN) or a wireless local area network (WLAN).

4. The method according to any one of the preceding claims, **characterized in that** the frequency-coded signals are used to control power features of the switching device (114).

5. The method according to any one of the preceding claims, **characterized in that** the signal processing device (112) is a network coupling device, a router, a gateway or part of a network coupling device or is assigned to a network coupling device by the connections technology provided at a central location in the network (100, 110).

6. The method according to any one of the preceding claims, **characterized in that** the communications link is established via SIP/SDP signals transmitted in the signaling channel (161), and a payload data stream is transmitted via RTP signals in the payload channel (160), wherein the communications link is preferably a voice-over-Internet protocol (VoIP) connection.

7. The method according to any one of the preceding claims, **characterized in that** the frequency-coded signals are removed from the downstream payload stream by the signal processing system.

8. The method according to any one of the preceding claims, **characterized in that** the payload channel (160) is transmitted by bypassing the switching device (114).

9. The method according to any one of the preceding claims, **characterized in that** the signaling channel (161) is relayed via the switching device (114).

10. The method according to any one of the preceding claims, **characterized in that** a separate connection and/or a separate connection channel is/are established for transmission of the frequency-coded signals to the switching device (114).

11. The method according to any one of claims 1 to 9, **characterized in that** the frequency-coded signals are transmitted from the signal processing device (112) to the switching device (114) via the signaling channel (161).

12. A telecommunications system for handling a telecommunications link between at least two subscribers (118, 158), wherein the telecommunications link comprises a signaling channel (161) for transmitting a signaling stream and a payload channel (160) for transmitting a payload stream, wherein frequency-coded signals are transmitted in the payload stream, wherein at least one subscriber (118) of the at least two subscribers (118, 158) is assigned to a network (100, 110); a switching device (114) and a signal processing device (112), which is provided separately from the switching device (114), wherein the frequency-coded signals in the payload stream are detected by the signal processing device (112) and transmitted to the switching device (114) independently of the payload stream,
**characterized in that** the telecommunications system is configured so that a decision is made in a feature process (350) on the basis of parameters in session initiation protocol (SIP) signals and/or session description protocol (SDP) signals embedded in the SIP signals, as to whether the telecommunications link might necessitate the reception of dual tone multifrequency (DTMF) codes; if a positive decision is made, the switching device (114) is configured in such a way that by means of remote programming, a rule (345a) is set in the signal processing device (112), enabling and/or instructing the signal processing device (112) to detect frequency-coded signals in the payload stream and to filter them out of the payload stream.

13. A switching device (114) for handling a telecommunications link in a telecommunications system between at least two subscribers (118, 158) in a communications network, wherein the telecommunications link comprises a signaling channel (161) for transmitting a signaling stream and a payload channel (160) for transmitting a payload stream, wherein frequency-coded signals are transmitted in the payload stream, wherein at least one subscriber (118) of the at least two subscribers (118, 158) is assigned to a network (100, 110) which has a switching device (114) and a signal processing device (112), which is provided separately from the switching device (114), wherein the frequency-coded signals in the payload stream are detected by the signal processing device (112) and are transmitted to the switching device (114) independently of the payload stream, **characterized in that** the switching device (114) is configured so that, by means of remote programming by the switching device (114), a rule (345a) is set in the signal processing device (112), enabling and/or instructing the signal processing device (112) to detect frequency-coded signals in the payload stream and to filter them out of the payload stream, when parameters in session initiation protocol (SIP) signals and/or in the session description protocol (SDP) signals embedded in the SIP signals indicate that the telecommunications link might necessitate the reception of dual tone multifrequency (DTMF) codes.

14. A network coupling device for handling a telecommunications link in a telecommunications system between at least two subscribers (118, 158) in a communications network, wherein the telecommunications link has a signaling channel (161) for transmitting a signaling stream and a payload channel (160) for transmitting a payload stream, wherein frequency-coded signals are transmitted in the payload stream, wherein at least one subscriber (118) of the at least two subscribers (118, 158) is assigned to a network (100, 110), comprising a switching device (114) and a signal processing device (112), which is provided separately from the switching device (114) as part of the network coupling device, wherein the frequency-coded signals in the payload stream are detected by the signal processing device (112) and transmitted to the switching device (114) independently of the payload stream, **characterized in that** the signal processing device (112) is configured in such a way that a rule (345a) is set in the signal processing device (112) by means of remote programming by the switching device (114), thereby enabling and/or instructing the signal processing device (112) to detect frequency-coded signals in the payload stream and filter them out of the payload stream when parameters in session initiation protocol (SIP) signals and/or session description protocol (SDP) signals embedded in the SIP signals indicate that the telecommunications link might necessitate the reception of dual tone multifrequency (DTMF) codes.

## Revendications

1. Procédé de gestion d'une liaison de télécommunication entre au moins deux abonnées (118, 158),
dans lequel la liaison de télécommunication présente un canal de signalisation (161) de transmission d'un flux de signalisation et un canal de charge utile (160) de transmission d'un flux de charge utile,
dans lequel des signaux codés en fréquence sont transmis dans le flux de charge utile,
dans lequel au moins un abonné (118) des au moins deux abonnés (118, 158) est associé à un réseau (100, 110), qui présente un système de commutation (114) et un système de traitement de signaux (112) prévu séparément du système de commutation (114), dans lequel
les signaux codés en fréquence sont identifiés dans le flux de charge utile par le système de traitement de signaux (112) et sont transmis au système de commutation (114) indépendamment du flux de charge utile,
**caractérisé en ce**
**qu'**il est décidé à l'aide de paramètres dans des signaux SIP (Session Initial Protocol - protocole de lancement) ou dans des signaux SDP (Session Description Protocol - protocole de description de session) intégrés dans les signaux SIP, lors d'un processus basé sur les fonctionnalités (350) si la liaison de télécommunication peut rendre nécessaire la réception de caractères DTMF (Dual-tone multi-frequency - ton dual multifréquence), que si la décision prise est positive, une règle (345a) est fixée dans le système de traitement de signaux (112) par le système de commutation (114), laquelle règle permet au système de traitement de signaux (112) et/ou lui ordonne d'identifier et de trier des signaux codés en fréquence provenant du flux de charge utile.

2. Procédé selon la revendication 1, **caractérisé en ce que** la règle (345a) est activée par l'intermédiaire de l'interface d'administration (112a) et est implémentée dans le système de traitement de signaux (112) réalisé sous la forme d'un routeur, que le routeur surveille, à l'aide de la règle (345a) implémentée, le flux de données RTP (Real-Time Transport Protocol - protocole de transport de données soumises à des contraintes de temps réel) reçu par l'intermédiaire du canal de charge utile (160), identifie des paquets RTP spécifiques que le flux de données contient, copie lesdits paquets dans une zone de stockage temporaire, établit un canal de bifurcation (162) par l'intermédiaire du réseau (100, 110) entre le routeur et un système de commutation (114) PBX (Private Branch Exchange - système de commutation téléphonique privé), un système de commutation PABX (Private Automatic Branch Exchange - système d'autocommutation téléphonique privé), ou un système de commutation IP PABX (système utilisant le protocole internet), qui transmet les caractères DTMF copiés par l'intermédiaire du canal de bifurcation (162) au système de commutation (114) et qui supprime de la zone de stockage temporaire les caractères DTMF transmis.

3. Procédé selon la revendication 1 ou 2, **caractérisé en ce que** le réseau (100, 110) est un réseau local, en particulier un réseau LAN (Local Area Network ou réseau local) ou un réseau WLAN (Wireless Local Area Network ou réseau local sans fil).

4. Procédé selon l'une quelconque des revendications précédentes, **caractérisé en ce que** les signaux codés en fréquence sont utilisés afin de commander des caractéristiques de puissance du système de commutation (114).

5. Procédé selon l'une quelconque des revendications précédentes, **caractérisé en ce que** le système de traitement de signaux (112) est un système de couplage à un réseau, un routeur, une passerelle ou une partie d'un système de couplage à un réseau, ou est associé par une technique de liaison à un système de couplage à un réseau, qui est prévu au niveau d'un poste central dans le réseau (100, 110).

6. Procédé selon l'une quelconque des revendications précédentes, **caractérisé en ce que** la liaison de communication est établie par l'intermédiaire de signaux SIP/SDP transmis dans le canal de signalisation (161), et un flux de données utiles est transmis par l'intermédiaire des signaux RTP dans le canal de charge utile (160), dans lequel la liaison de communication est de préférence une liaison VoIP (Voice over Internet Protocol ou liaison voix sur IP).

7. Procédé selon l'une quelconque des revendications précédentes, **caractérisé en ce que** les signaux codés en fréquence sont supprimés du flux de charge utile en aval par l'installation de traitement de signaux.

8. Procédé selon l'une quelconque des revendications précédentes, **caractérisé en ce que** le canal de charge utile (160) est transmis en contournant le système de commutation (114).

9. Procédé selon l'une quelconque des revendications précédentes, **caractérisé en ce que** le canal de signalisation (161) est guidé par l'intermédiaire du système de commutation (114).

10. Procédé selon l'une quelconque des revendications précédentes, **caractérisé en ce qu'**une liaison propre ou un canal de liaison propre est établie/établi aux fins de la transmission des signaux codés en fréquence au système de commutation (114).

11. Procédé selon l'une quelconque des revendications 1 à 9, **caractérisé en ce que** les signaux codés en fréquence sont transmis par le système de traitement de signaux (112) par l'intermédiaire du canal de signalisation (161) au système de commutation (114).

12. Ensemble de télécommunication de gestion d'une liaison de télécommunication entre au moins deux abonnés (118, 158), dans lequel la liaison de télécommunication présente un canal de signalisation (161) de transmission d'un flux de signalisation et un canal de charge utile (160) de transmission d'un flux de charge utile,
dans lequel des signaux codés en fréquence sont transmis dans le flux de charge utile,
dans lequel au moins un abonné (118) des au moins deux abonnés (118, 158) est associé à un réseau (100, 110), qui présente un système de commutation (114) et un système de traitement de signaux (112) prévu de manière séparée du système de commutation (114), dans lequel les signaux codés en fréquence sont identifiés dans le flux de charge utile par le système de traitement de signaux (112) et sont transmis au système de commutation (114) indépendamment du flux de charge utile, **caractérisé en ce que**
l'ensemble de télécommunication est configuré de telle manière qu'il est décidé à l'aide de paramètres dans des signaux SIP (Session Initial Protocol - protocole de lancement) ou dans des signaux SDP (Session Description Protocol - protocole de description de session) intégrés dans les signaux SIP, lors d'un processus basé sur les fonctionnalités (350) si la liaison de télécommunication peut rendre nécessaire la réception de caractères DTMF (Dual-tone multi-frequency - ton dual multifréquence), que si la décision prise est positive, le système de commutation (114) est configuré de telle manière qu'une règle (345a) est fixée dans le système de traitement de signaux (112) au moyen d'une programmation à distance, laquelle règle permet au système de traitement de signaux (112) et/ou lui ordonne d'identifier et de trier des signaux codés en fréquence provenant du flux de charge utile.

13. Système de commutation (114)
de gestion d'une liaison de télécommunication dans un ensemble de télécommunication entre au moins deux abonnés (118, 158) dans un réseau de communication, dans lequel la liaison de télécommunication présente un canal de signalisation (161) de transmission d'un flux de signalisation et un canal de charge utile (160) de transmission d'un flux de charge utile,
dans lequel des signaux codés en fréquence sont transmis dans le flux de charge utile,
dans lequel au moins un abonné (118) des au moins deux abonnés (118, 158) est associé à un réseau (100, 110), qui présente un système de commutation (114) et un système de traitement de signaux (112) prévu de manière séparée du système de commutation (114), dans lequel les signaux codés en fréquence sont identifiés dans le flux de charge utile par le système de traitement de signaux (112) et sont transmis au système de commutation (114) indépendamment du flux de charge utile, **caractérisé en ce**
**que** le système de commutation (114) est configuré de telle manière qu'une règle (345a) est fixée dans le système de traitement de signaux (112) au moyen d'une programmation à distance par le système de commutation (114), laquelle règle permet au système de traitement de signaux (112) et/ou lui ordonne d'identifier et de trier des signaux codés en fréquence provenant du flux de charge utile quand des paramètres dans des signaux SIP ou dans des signaux SDP intégrés dans les signaux SIP indiquent que la liaison de télécommunication pourrait rendre nécessaire la réception de caractères DTMF.

14. Système de couplage à un réseau de gestion d'une liaison de télécommunication dans un ensemble de télécommunication entre au moins deux abonnés (118, 158) dans un réseau de communication, dans lequel la liaison de télécommunication présente un canal de signalisation (161) de transmission d'un flux de signalisation et un canal de charge utile (160) de transmission d'un flux de charge utile,
dans lequel des signaux codés en fréquence sont transmis dans le flux de charge utile,
dans lequel au moins un abonné (118) des au moins deux abonnés (118, 158) est associé à un réseau (100, 110), qui présente un système de commutation (114) et un système de traitement de signaux (112) prévu de manière séparée du système de commutation (114) en tant que partie du système de couplage à un réseau,
dans lequel
les signaux codés en fréquence sont identifiés dans le flux de charge utile par le système de traitement de signaux (112) et sont transmis au système de commutation (114) indépendamment du flux de charge utile,
**caractérisé en ce**
**que** le système de traitement de signaux (112) est configuré de telle manière qu'une règle (345a) est fixée dans le système de traitement de signaux (112) au moyen d'une programmation à distance par le système de commutation (114), laquelle règle permet au système de traitement de signaux (112) et/ou lui ordonne d'identifier et de trier des signaux codés en fréquence provenant du flux de charge utile quand des paramètres dans des signaux SIP ou dans des signaux SDP intégrés dans les signaux SIP indiquent que la liaison de télécommunication pourrait rendre nécessaire la réception de caractères DTMF.
